# EUROPÄISCHE PATENTSCHRIFT

(11) **EP 2 965 023 B1**
(45) Veröffentlichungstag und Bekanntmachung des Hinweises auf die Patenterteilung: **16.05.2018**
(21) Anmeldenummer: 14707815.8
(22) Anmeldetag: 05.03.2014
(51) Int. Cl.: F24J 2/46

(54) **SOLARFELD FÜR EIN LINEAR KNOZENTRIERENDES SOLARKRAFTWERK**
SOLAR FIELD FOR A LINEAR CONCETRATING SOLAR POWER PLANT
CHAMPS SOLAIRE POUR UNE CENTRALE SOLAIRE A CONCENTRATION LINEAIRE

(30) Priorität: 06.03.2013 EP 13158024
(43) Veröffentlichungstag der Anmeldung: 13.01.2016
(73) Patentinhaber: BASF SE, 67056 Ludwigshafen am Rhein (DE)
(72) Erfinder: WORTMANN, Jürgen, 67117 Limburgerhof (DE); LUTZ, Michael, 67346 Speyer (DE); KALETA, Katharina, 69123 Heidelberg (DE); SCHIERLE-ARNDT, Kerstin, 64673 Zwingenberg (DE); MAURER, Stephan, 67435 Neustadt (DE); LADENBERGER, Michael, 76848 Darstein (DE)
(86) Internationale Anmeldenummer: PCT/EP2014/054220
(87) Internationale Veröffentlichungsnummer: WO 2014/135567

(56) Entgegenhaltungen:
- WO-A1-2012/156472
- DE-A1- 2 839 258
- DE-A1- 3 939 344
- DE-A1-102010 003 310
- DE-A1-102010 034 653
- DE-C1- 3 935 932
- DE-U1-202007 002 645
- US-A- 4 407 269
- US-A- 4 519 383
- US-B1- 6 701 711

## Beschreibung

Die Erfindung betrifft ein Solarfeld mit einem Rohrleitungssystem, umfassend mindestens zwei Rohrleitungsschleifen, die an einem Ende mit einem Sammler und an einem zweiten Ende mit einem Verteiler verbunden sind.

Rohrleitungssysteme, die mindestens zwei Rohrleitungsschleifen umfassen, die an einem Ende mit einem Sammler und an einem zweiten Ende mit einem Verteiler verbunden sind, werden zum Beispiel in linear konzentrierenden Solarkraftwerken, insbesondere in Fresnel-Solarkraftwerken und in Parabolrinnen-Solarkraftwerken eingesetzt. In diesem Fall werden die Rohrleitungsschleifen von einer für die in einem Solarkraftwerk auftretenden Temperaturen geeigneten Wärmeträgerflüssigkeit durchströmt. Geeignete Wärmeträgerflüssigkeiten sind zum Beispiel Salzschmelzen.

In einem linear konzentrierenden Solarkraftwerk ist das gesamte Rohrleitungssystem im Allgemeinen in Form von Netzwerken gestaltet, die der Erfassung solarer Energie dienen. Hierzu wird die Strahlungsenergie der Sonne mittels Parabolspiegeln oder Fresnel-Spiegeln auf Receiver konzentriert. Die Kombination von Spiegel und Receiver wird Kollektor genannt. Eine Reihe von Kollektoren wird zu sogenannten Solarschleifen in Reihe geschaltet. Hierzu sind die Receiver jeweils mit dem Rohrleitungssystem verbunden beziehungsweise stellen einen Teil des Rohrleitungssystems dar. Das Rohrleitungssystem wird von der Wärmeträgerflüssigkeit durchströmt, auf die die von den Receivern erfasste Strahlungsenergie übertragen wird.

Derzeit wird als Wärmeträgerflüssigkeit insbesondere ein Biphenyl/Diphenylether-Gemisch eingesetzt, das jedoch durch seine Zersetzungstemperatur von ca. 400°C in seiner maximalen Betriebstemperatur begrenzt ist. Um höhere Betriebstemperaturen, die einen höheren Wirkungsgrad ermöglichen, zu erhalten, sind andere Wärmeträgerflüssigkeiten erforderlich. Hierzu werden insbesondere Salzschmelzen, beispielsweise sogenanntes Solarsalz, ein Gemisch aus Natriumnitrat und Kaliumnitrat im Verhältnis von 60:40, eingesetzt.

Nachteil von Salzschmelzen ist jedoch, dass diese hochschmelzend sind. Eine Natrium-/Kaliumnitratmischung schmilzt zum Beispiel im Eutektikum, das heißt bei einem Mischungsverhältnis von 44:56 bei einer Temperatur von 218°C. In langen Rohrleitungssystemen, wie diese in Solarkraftwerken auftreten, sind Salzschmelzen mit hohen Schmelzpunkten schwierig sicher zu betreiben. Das Einfrieren der Salzschmelze kann in Rohrleitungssystemen große wirtschaftliche Schäden verursachen. Ursache der Schäden ist zum Beispiel die starke Volumenausdehnung von Salzen beim Aufschmelzen. Es besteht die Gefahr, dass Armaturen und Rohrleitungen aufgedrückt und stark beschädigt werden.

Wenn die Salzschmelze einfriert, was grundsätzlich außerhalb der Betriebszeiten des Solarkraftwerks, das heißt außerhalb der Strahlungszeiten der Sonne oder witterungsbedingtem Ausfall der Sonnenstrahlung erfolgen kann, kommt es zu einer Volumenkontraktion, die in Abhängigkeit vom Rohrleitungssystem und Betriebszustand zu einem unterschiedlichen Erstarrungszustand führen kann. Es wird erwartet, dass im Allgemeinen evakuierte Blasen in der Rohrleitung entstehen, die zu mehr oder minder größeren Einheiten zusammenlaufen. Beim Wiederaufschmelzen kann durch gegebenenfalls große räumliche Entfernung zwischen den Aufschmelzstellen mit Volumenexpansion und den evakuierten Bereichen kein ausreichender Volumenausgleich erfolgen, um auftretende Drücke abzubauen.

Um ein Einfrieren der Salzschmelze im Rohrleitungssystem zu verhindern, ist es üblich, bei längeren Stillstandszeiten das Rohrleitungssystem zu entleeren. Bei den derzeitigen Rohrleitungssystemen mit einem Vorratsbehälter für die Salzschmelze nimmt das Entleeren jedoch eine lange Zeit in Anspruch und ist insbesondere bei kurzfristigen Ausfällen, zum Beispiel bei einem Stromausfall nicht sicher zu gewährleisten, da dass insbesondere in solchen Fällen Schäden an den Rohrleitungen auftreten können.

Zum Entleeren ist derzeit ein Entleerungsbehälter vorgesehen, der in einer Senke errichtet und bei Auslaufen die Wärmeträgerflüssigkeit in einer Behälterwanne aufnehmen kann. Die einzelnen Solarschleifen, die vom Rohrleitungssystem gebildet werden, weisen ein leichtes Gefälle von ca. 0,3 % auf, so dass die in den Rohrleitungen enthaltene Flüssigkeit aufgrund des Gefälles bei einer Entleerung in den Entleerungsbehälter getrieben wird. Aufgrund einer besseren optischen Effizienz der Kollektoren wird allerdings angestrebt, weitgehend ohne Gefälle zu arbeiten.

In bisher bekannten Solarkraftwerken mit Salzschmelze als Wärmeträger mit nur einem Entleerungsbehälter ist das geringe Gefälle, das eingesetzt wird, im Allgemeinen nicht geeignet, um insbesondere Rohrleitungssysteme mit langen Rohrleitungen, wie sie in Solarkraftwerken eingesetzt werden und die eine Gesamtrohrleitungslänge von mehr als 100 km aufweisen können, ausreichend schnell und vollständig zu entleeren. Des Weiteren werden Ventile und Hähne eingesetzt, die über keine sichere Stellung verfügen. So können bei einem Energieausfall die Ventile die Solarschleife zum Beispiel nicht in einen entleerten, sicheren Zustand führen. In diesem Fall ist mit dem Einfrieren des als Wärmeträgerflüssigkeit eingesetzten Salzes zu rechnen. Die Lösung, die elektrische Energieversorgung durch eine Ersatzeinspeisung zu stützen, ist nicht gegen alle Funktionsstörungen in der Anlage ausreichend sicher. Schließlich entstehen bei einer Entleerung in einen zentralen Entleerungsbehälter lange Ablaufwege und Ablaufzeiten mit dem Risiko, dass das Wärmeträgersalz während des Ablaufs erstarrt. Außerdem kann eine Störung an einer Solarschleife zur Außerbetriebnahme aller anderen Solarschleifen führen.

Derzeit wird zur Minimierung der durch die Salzschmelze auftretenden Probleme in den Rohrleitungen im Allgemeinen Salz mit einem niedrigeren Schmelzpunkt eingesetzt. Derartige Salzschmelzen weisen jedoch erhebliche Nachteile auf. Bekannte Wärmeträgersalze mit niedrigerer Schmelztemperatur sind zum Beispiel Mischungen aus Nitraten und Nitriten des Natrium und Kalium sowie aus Kaliumnitrat, Natriumnitrat und Calciumnitrat.

Derartige Mischungen haben jedoch eine geringere thermische Stabilität als das üblicherweise eingesetzte Solarsalz aus Kaliumnitrat und Natriumnitrat, wodurch der Einsatzbereich auf eine Temperatur von weniger als 500°C eingeschränkt wird. Dies hat zur Folge, dass ein niedrigerer Wirkungsgrad des Kraftwerkes in Kauf genommen werden muss. Zudem müssen die Salze in geschlossenen Systemen gehalten werden, was im Bereich des Solarfeldes zu einem zusätzlichen Aufwand führt, da Inertisierungssysteme im Solarfeld verlegt werden müssen. Die Inertisierung ist notwendig, weil einerseits bei Nitrit-haltigen Salzen Luftsauerstoff das Nitrit zu Nitrat oxidieren kann und der Festpunkt des Salzes dadurch unkontrolliert steigen kann und bei der Calciumhaltigen Systemen Kohlenstoffdioxid mit Calciumionen zu unlöslichen Calciumcarbonat reagiert.

Alternative weitere Salze enthalten in beträchtlichem Umfang teure und wenig verfügbare Elemente, die den wirtschaftlichen Einsatz auf Systeme mit niedrigen Einsatzmengen beschränkt. Teure Komponenten in diesen Salzen sind zum Beispiel Lithium, Rubidium und Cäsium.

Von Salzen abweichende Wärmeträgersysteme haben im Allgemeinen einen hohen Dampfdruck oder verursachen erheblichen Aufwand zum Korrosionsschutz langer Rohrleitungssysteme.

Aus der chemischen Industrie sind zur Beheizung von Salzbadreaktoren Systeme bekannt, bei denen an tiefster Stelle ein Entleerungstank vorliegt, der mit Stickstoff überlagert ist. Im System sind alle Stellgeräte in sicherer Stellung, so dass bei einem ungewollten Betriebszustand das geschmolzene Wärmeträgersalz, im Allgemeinen ein Gemisch im Wesentlichen aus Natriumnitrit und Kaliumnitrat in den Entleerungsbehälter fließt. Hierzu sind alle Rohrleitungen fallend zum Entleerungsbehälter angeordnet. Die Rohrleitungen besitzen dabei einen so großen Durchmesser, dass die Leitungen leerlaufen, auch wenn keine weiteren Belüftungen vorgesehen sind. Nichtablauffähige Bereiche, beispielsweise oberhalb von Stellgeräten und Fallleitungen besitzen eigene Entleerungsleitungen, über die auch bei Ventilblockade entleert werden kann. Das geschmolzene Wärmeträgersalz wird aus den Entleerungsbehältern mit Hilfe von Tauchpumpen in die chemischen Anlagen transportiert.

Diese typischen Lösungen von Salzbadreaktoren sind in einem Solarfeld aufgrund seiner weiten Ausdehnung jedoch nicht vollständig anwendbar und nicht ausreichend. So ist es zum Beispiel ungeeignet, nur einen Entleerungsbehälter für ein großes Solarkraftwerk einzusetzen, da der Entleerungsprozess zu lange dauern würde, um ein Einfrieren sicher zu verhindern. Darüber hinaus ist die Reichweite der Auswirkungen von Fehlern im Rohrleitungssystem, z.B. Fehlfunktion von Ventilen, zu begrenzen. Zudem werden Salzbadreaktoren im Allgemeinen kontinuierlich betrieben, das heißt, dass nach dem Anfahren des Reaktors die Anlage kontinuierlich bis zur nächsten Revision durchläuft. Die Anlage ist bis dahin ständig heiß und alle Anlagenteile unter Durchfluss. Hierdurch wird versucht zu vermeiden, dass Verstopfungen durch Erstarren des Salzes auftreten, die - wenn überhaupt - nur sehr aufwändig zu beseitigen sind. Solarkraftwerke sind jedoch einem ständigen Zyklus regelmäßig wechselnder Betriebszustände unterworfen. So wird beispielsweise das Solarfeld nachts nicht mit Strahlungsenergie versorgt. Ein kontinuierlicher heißer Betrieb über alle Anlagenteile würde zu hohen Strahlungsverlusten im Solarfeld führen. Um die hohen Strahlungsverluste zu vermeiden ist es daher sinnvoll, ein Solarkraftwerk diskontinuierlich zu betreiben, um insbesondere nächtliche Energieverluste klein zu halten.

Weiterhin unterscheiden sich Salzbadreaktoren und Rohrleitungssysteme in Solarkraftwerken in ihrer Größe. So haben Salzbadreaktoren üblicherweise Rohrleitungslängen von höchstens einigen hundert Metern, wohingegen die Länge der Rohrleitungen in Solarkraftwerken 100 Kilometern überschreiten kann. Dies führt auch zu einer entsprechend größeren Salzmenge im System. Alleine aufgrund ihrer Größe lassen sich daher diese Rohrleitungssysteme in Solarkraftwerken nicht analog zu Rohrleitungssystemen beispielsweise in Salzbadreaktoren betreiben.

Ein Solarkraftwerk umfassend ein Solarfeld mit Rohrleitungen zur Förderung einer Salzschmelze ist bereits aus der WO 2012/156472 bekannt.

Aufgabe der Erfindung ist es daher, ein Solarfeld mit einem Rohrleitungssystem mit mindestens zwei Rohrleitungsschleifen bereit zu stellen, das in Solarkraftwerken eingesetzt werden kann und das eine sichere Entleerung zu Stillstandszeiten ermöglicht.

Gelöst wird die Aufgabe durch ein Solarfeld gemäß Anspruch 1, mit einem Rohrleitungssystem, umfassend mindestens eine Rohrleitung, die an einem Ende mit einem Sammler und an einem zweiten Ende mit einem Verteiler verbunden ist, wobei der Sammler und der Verteiler in unterschiedlicher geodätischer Höhe angeordnet sind und bei oben liegendem Sammler in den Sammler Druckgas eingespeist werden kann und der Verteiler mit einem Entleerungsbehälter verbunden ist und bei oben liegendem Verteiler in den Verteiler Druckgas einspeist werden kann und der Sammler mit einem Entleerungsbehälter verbunden ist, wobei der Entleerungsbehälter tiefer liegt als der Sammler und der Verteiler.

Wenn eine Anlage eine Vielzahl von Rohrleitungen und Rohrleitungsschleifen umfasst, beispielsweise ein Solarfeld eines Solarkraftwerks, erfolgt eine Aufteilung der gesamten Rohrleitungen in mehrere voneinander unabhängige Rohrleitungssysteme, die jeweils mindestens eine Rohrleitung umfassen, die an einem Ende mit einem Sammler und an einem zweiten Ende mit einem Verteiler verbunden ist. Durch diese Aufteilung der gesamten Rohrleitungen der Anlage, beispielsweise dem Solarfeld eines Solarkraftwerkes, ist es möglich ein Rohrleitungssystem zu entleeren, während andere Rohrleitungssysteme unbeeinträchtigt in Funktion sind. Bevorzugt ist es, wenn die Rohrleitung, die an einem Ende mit einem Sammler und an einem zweiten Ende mit einem Verteiler verbunden ist, als Rohrleitungsschleife gestaltet ist, so dass Sammler und Verteiler übereinander angeordnet sind. Erfindungsgemäß ist jedem dieser Systeme mindestens ein Entleerungsbehälter zugeordnet, in den drainiert werden kann. Die Entleerungsbehälter und ihre korrespondierenden Rohrleitungssysteme können auf unterschiedlichen geodätischen Höhen installiert werden. Dadurch können abhängig von der vorgegebenen Topographie des Geländes aufwändige Geländenivellierungen vermieden oder minimiert werden. Die Unterschiede in den geodätischen Höhen der Entleerungsbehälter werden durch den zulässigen Pumpendruck begrenzt, die in den Hauptverteiler einspeisen. Eine Unterteilung des Pumpvorgangs in mehrere Stufen erhöht die zulässigen geodätischen Höhendifferenzen der jeweiligen Rohrleitungssysteme.

Durch die Anordnung von Sammler und Verteiler in unterschiedlicher geodätischer Höhe fließt die im Rohrleitungssystem enthaltene Flüssigkeit bei einer notwendigen Entleerung aus dem oben liegenden Verteiler oder Sammler durch die Rohrleitungen in den untenliegenden Sammler oder Verteiler und von dort in den Entleerungsbehälter.

Dieser Prozess kann durch das Einspeisen von Druckgas unterstützt werden. Mit dem Druckgas wird die Flüssigkeit aus dem Rohrleitungssystem in den Entleerungsbehälter gedrückt. Die Flüssigkeit fließt so schneller ab, als wenn sie nur durch die Schwerkraft getrieben wird. Zudem ermöglicht das Einspeisen von Druckgas auch, dass die Rohrleitungen des Rohrleitungssystems nahezu waagerecht verlaufen können. Ein weiterer Vorteil, ein Druckgas einzuspeisen, ist, dass so die Länge der Rohrleitungen beziehungsweise Rohrleitungsschleifen größer gewählt werden kann, ohne die Entleerungsfähigkeit des Rohrleitungssystems zu gefährden.

In einer Ausführungsform der Erfindung sind der Sammler und der Verteiler in Form jeweils einer Rohrleitung ausgebildet und die Rohrleitungen zweigen jeweils mit einem Ende aus dem Sammler und mit dem anderen Ende aus dem Verteiler ab. Diese Gestaltung ermöglicht es, dass aus einem Sammler und einem Verteiler mehrere Rohrleitungen abzweigen.

In einem Solarkraftwerk umfasst jede Rohrleitungsschleife üblicherweise mehrere Kollektoren, in denen das empfangene Sonnenlicht auf die Salzschmelze konzentriert wird und die Salzschmelze hierdurch aufgeheizt wird.

Bevorzugt ist es weiterhin, wenn der Sammler und der Verteiler an einem Ende miteinander verbunden sind, so dass Flüssigkeit, die nicht aus dem Verteiler in eine Rohrleitungsschleife strömt, am Ende des Verteilers in den Sammler geleitet wird. Der Sammler und der Verteiler bilden somit ebenfalls eine Rohrleitungsschleife. Durch diese Gestaltung wird vermieden, dass sich Salzschmelze am Ende des Verteilers aufstaut. Die Verbindung von Sammler und Verteiler kann dabei auch über eine Rohrleitungsschleife erfolgen. Hierzu geht der Verteiler an seinem Ende in einer Rohrleitungsschleife über, die wiederum an einem Ende in den Sammler mündet.

Weiterhin ist es möglich, dass aus dem Verteiler jeweils gegenüberliegend zwei Rohrleitungsschleifen abzweigen, die in entgegengesetzter Richtung ausgerichtet sind. Entsprechend münden die gegenüberliegenden Rohrleitungsschleifen wieder an einer gegenüberliegenden Position in den Sammler.

Um eine ausreichend große Leistung des Solarkraftwerks zu erhalten, ist es weiterhin bevorzugt, wenn das Rohrleitungsgesamtsystem mehrere Sammler und Verteiler umfasst, die jeweils mit mehreren Rohrleitungen beziehungsweise Rohrleitungsschleifen verbunden sind, wobei alle Sammler mit einem Hauptsammler und alle Verteiler mit einem Hauptverteiler verbunden sind. Über den Hauptverteiler gelangt die Salzschmelze in die Verteiler und von dort in die Rohrleitungen beziehungsweise Rohrleitungsschleifen. In den Rohrleitungen beziehungsweise Rohrleitungsschleifen nimmt die Salzschmelze Wärme durch einstrahlende Sonne auf und strömt dann aus der Rohrleitung beziehungsweise Rohrleitungsschleife in den Sammler und aus dem Sammler in den Hauptsammler. Bevorzugt ist es, wenn zur Entleerung eines oder mehrerer Rohrleitungssysteme der Zugang des mindestens einen zu entleerenden Rohrleitungssystems zum Hauptsammler und Hauptverteiler geschlossen wird, beispielsweise durch Zugangsventile und Abgangsventile im Sammler und Verteiler im Bereich des Abzweigs von Sammler und Verteiler aus dem Hauptsammler und Hauptverteiler.

Um die Wärme auch zu Zeiten ohne solarer Wärmeeinstrahlung oder bei verminderter solarer Wärmeeinstrahlung nutzen zu können sind vorzugsweise Speichersysteme vorgesehen, in denen die erwärmte heiße Salzschmelze in einem heißen Bereich gespeichert wird. Zu Zeiten ohne solare Wärmeeinstrahlung wird mit der gespeicherten heißen Salzschmelze Dampf erzeugt, der wiederum einen Generator zur Stromerzeugung antreibt. Nach der Dampferzeugung und die damit verbundene Abkühlung der Salzschmelze wird die Salzschmelze zurück in einen kälteren Bereich des Speichersystems geleitet. Bei ausreichender solarer Einstrahlung kann die erwärmte heiße Salzschmelze direkt zur Gewinnung elektrischer Energie genutzt werden. Überschusswärme kann in Form heißer Salzschmelze im heißen Bereich des Speichersystems gespeichert werden.

Die Entleerungsbehälter, in die beim Entleeren des Rohrleitungssystems die Flüssigkeit geleitet wird, sind vorzugsweise in der Nähe der Hauptsammler und Hauptverteiler jeweils zwischen dem Hauptsammler bei oben liegendem Verteiler beziehungsweise Hauptverteiler bei obenliegendem Sammler und der ersten aus dem Sammler beziehungsweise Verteiler abzweigenden Rohrleitung positioniert. "In der Nähe" bedeutet dabei, dass die Entleerungsbehälter so nah wie aufstellungstechnisch möglich an die Abzweigung von Verteiler und Sammler zum Hauptverteiler beziehungsweise Hauptsammler positioniert werden. Durch diese Positionierung weist jedes Rohrleitungssystem, das einen Sammler, einen Verteiler und mindestens zwei Rohrleitungen beziehungsweise Rohrleitungsschleifen zwischen Sammler und Verteiler umfasst, einen eigenen Entleerungsbehälter auf. Zudem wird durch die größere Anzahl an Entleerungsbehältern das Gesamtsystem im Bedarfsfall schneller entleert.

Die vorstehend beschriebene Positionierung des Entleerungsbehälters hat den weiteren Vorteil, dass die Salzschmelze in den Zuleitungen zum Hauptsammler und Hauptverteiler bis zu deren Absperrventilen sich in den Entleerungsbehälter entleeren kann. Bei geöffneten Absperrventilen kann auch zusätzlich der Inhalt der Hauptsammler und Hauptverteiler in die Entleerungsbehälter entleert werden, allerdings ohne Hilfe eines Treibdrucks aus den Druckgasspeichern.

Die Positionierung der Druckgasspeicher ist bevorzugt in der Nähe der Entleerungsbehälter und damit auch in der Nähe der Hauptsammler und Hauptverteiler. Durch diese Positionierung kann die Länge der Druckgasversorgungsleitungen klein gehalten werden.

Damit auch die im Hauptsammler und Hauptverteiler enthaltene Schmelze in die Entleerungsbehälter fließen kann, ist es weiterhin bevorzugt, wenn auch Hauptverteiler und Hauptsammler mit dem Entleerungsbehälter verbunden sind. Der Entleerungsbehälter selbst liegt tiefer als alle Rohrleitungen im Rohrleitungssystem, das heißt tiefer als der Hauptsammler und der Hauptverteiler, so dass die gesamte Flüssigkeit in den Entleerungsbehälter ablaufen kann. Die Verbindung von Hauptsammler und/oder Hauptverteiler mit dem Entleerungsbehälter kann zum Beispiel durch einen Bypass mit einer aus dem Sammler oder Verteiler abzweigenden und in den Entleerungsbehälter mündenden Leitung realisiert werden. Alternativ ist es auch möglich, eine separate Verbindungsleitung aus dem Hauptsammler und/oder Hauptverteiler mit dem Entleerungsbehälter vorzusehen.

Die Einspeisung von Druckgas in Sammler oder Verteiler kann zum Beispiel aus einem Druckgasspeicher erfolgen, der mit dem Sammler beziehungsweise Verteiler verbunden ist. Die Verbindung erfolgt dabei mit einer Druckgasleitung, die aus dem Druckgasspeicher in den Sammler beziehungsweise Verteiler mündet. Länge und Durchmesser der Druckgasleitung werden dabei vorzugsweise so gewählt, dass ein unerwünscht großer Druckabfall vermieden wird. Um nur dann Druckgas in das Rohrleitungssystem einzuspeisen, wenn eine Entleerung gewünscht ist, ist in der Druckgasleitung ein Belüftungsventil vorgesehen, das öffnet, wenn das Rohrleitungssystem entleert werden soll.

Damit die Flüssigkeit nur dann in den Entleerungsbehälter läuft, wenn das Rohrleitungssystem entleert werden soll, ist es zum Beispiel möglich, in der Verbindung aus dem Sammler beziehungsweise Verteiler und sofern vorhanden in der Verbindung aus dem Hauptverteiler oder Hauptsammler in den Entleerungsbehälter ein Entleerungsventil vorzusehen. Das Entleerungsventil öffnet, wenn das Rohrleitungssystem entleert werden soll.

In einer besonders bevorzugten Ausführungsform ist jedes Belüftungsventil und jedes Entleerungsventil ein Ventil mit eigensicherer Funktion ("fail-safe"-Eigenschaft), das bei Auftreten einer eine Entleerung erfordernden Situation, gegebenenfalls auch verzögert, öffnet. Derartige eine Entleerung erfordernde Situationen sind zum Beispiel das Auftreten einer Übertemperatur oder einer Untertemperatur in einer Rohrleitungsschleife, das Auftreten eines Überdrucks oder eines Unterdrucks in einer Rohrleitungsschleife, eine Abweichung der Durchflussmenge durch eine Rohrleitungsschleife oder auch ein Stromausfall. Weiterhin kann ein Entleeren auch bedingt sein zum Beispiel durch eine automatische Steuerung, beispielsweise eine Nachtentleerung im laufenden Betrieb oder auch eine Entleerung, wenn die Sonneneinstrahlung nicht ausreichend ist, um das Solarkraftwerk sicher betreiben zu können. Weiterhin soll eine Entleerung auch bei einem manuellen Eingriff möglich sein.

Das Auftreten einer Über- oder Untertemperatur in einer Rohrleitungsschleife oder auch eine Isolationsstörung kann beispielsweise mit einem Infrarot-optischen Scansystem über das gesamte Solarfeld schnell lokalisiert werden. Auch ein solches Scansystem kann zum Beispiel eine Entleerung des Rohrleitungssystems auslösen, wenn von der Norm abweichende Werte gemessen werden.

Die als Ventil mit eigensicherer Funktion ("fail-safe") eingesetzten Entleerungsventile und Belüftungsventile sind im normalen Betrieb des Solarkraftwerks geschlossen. Wenn eine Entleerung erfolgt, werden die Ventile automatisch geöffnet. Hierdurch strömt Druckgas durch das geöffnete Belüftungsventil in das Rohrleitungssystem und die Flüssigkeit aus dem Rohrleitungssystem durch das geöffnete Entleerungsventil in den Entleerungsbehälter. Das Volumen des Entleerungsbehälters ist so groß zu wählen, dass die in dem zu entleerenden, dem Entleerungsbehälter zugeordneten Rohrleitungssystem befindliche Flüssigkeit vollständig aufgenommen werden kann.

In einer Ausführungsform wird das Belüftungsventil über einen Zweiphasenbehälter angeschlossen. Dies bietet den Vorteil einer geringeren Belastung der Ventile. Ohne den Einsatz des Zweiphasenbehälters wirken die hohen Temperaturen des Rohrleitungssystems und ein direkter Salzkontakt auf die Ventile. Durch den Zweiphasenbehälter kann dies vermieden werden, so dass eine längere Lebensdauer und eine sicherere Funktion der Ventile gewährleistet werden kann.

Der Druck wird begrenzt durch die Druckhaltefähigkeit der angeschlossenen Rohrleitungen und Behälter. Dabei kann bei der Auslegung der Druckfestigkeit von Behälter und Rohrleitungen genutzt werden, dass sich der Druck im Druckgasspeicher während des Entleerungsvorgangs senkt. Bevorzugt ist ein anfänglicher Absolutdruck von 5 bis 30 bar. Besonders bevorzugt ist ein Absolutdruck im Bereich von 10 bis 20 bar. Die Geschwindigkeit der Entleerung kann durch Strömungsbegrenzungseinrichtungen am Druckgasspeicher kontrolliert werden.

Das eingesetzte Druckgas ist vorzugsweise komprimierte Luft. Wenn das Rohrleitungssystem ein Rohrleitungssystem in einem Solarkraftwerk ist und von einer Salzschmelze durchflossen wird, kann Druckluft dann verwendet werden, wenn in der Salzschmelze keine Komponenten enthalten sind, die mit Bestandteilen der Luft chemisch reagieren. Eine mögliche chemische Reaktion kann dadurch verhindert werden, dass ein Luftkontakt bei einer Drainage nur bei einer so tiefen Temperatur zugelassen wird, dass eine mögliche chemische Reaktion kinetisch nicht mehr stattfinden kann. Wenn in der Salzschmelze Komponenten enthalten sind, die mit Bestandteilen der Luft chemisch reagieren, kann als Druckgas alternativ auch ein Inertgas, beispielsweise komprimierter Stickstoff eingesetzt werden. Das Inertgas kann selbstverständlich auch dann eingesetzt werden, wenn die Salzschmelze keine Komponenten enthält, die mit Bestandteilen der Luft chemisch reagieren. In diesem Fall ist allerdings der Einsatz von Druckluft bevorzugt. Darüber hinaus ist es alternativ auch möglich, das Druckgas in den Druckgasspeichern durch Komprimieren von Anlagengas zu erzeugen, das z.B. aus der Gasphase des Speichersystems entnommen werden kann.

Zusätzlich zur Beschickung des Rohrleitungssystems mit einem Druckgas ist es auch möglich, die Entleerungsbehälter jeweils zu evakuieren. In diesem Fall führt der Luftdruck bei Öffnen der Belüftungsventile zu einem beschleunigten Entleeren der Rohrleitungen in den Entleerungsbehälter. Das Evakuieren des Entleerungsbehälters hat den weiteren Vorteil, dass ein schnelles und sicheres Entleeren auch dann möglich ist, wenn beispielsweise aufgrund eines Stromausfalls nicht ausreichend Druckgas zur Verfügung steht. Eine druckgetriebene schnelle Entleerung ist in diesem Fall gegenüber Umgebungsdruck bei Öffnen des Belüftungsventils gegen die Umgebung möglich.

In einer Ausführungsform der Erfindung sind dezentrale Druckgasspeicher jeweils in der Nähe der Belüftungsventile angeordnet. Durch Nutzung eines Druckgasspeichers ist ebenfalls ein schnelles und sicheres Entleeren eines Rohrleitungssystems auch dann möglich, wenn beispielsweise aufgrund eines Stromausfalls nicht ausreichend Druckgas erzeugt werden kann. Das Druckvolumen des Druckgasspeichers ist dabei vorzugsweise das Volumen eines gasgefüllten Behälters multipliziert mit seinem Gasdruck. Hier muss zusätzlich beachtet werden, dass das Druckgas beim Eintreten in das Rohrleitungssystem im Wesentlichen dessen Temperatur annimmt. Ist das zu entleerende Rohrleitungssystem heißer als das Druckgas im Druckgasspeicher, wird dabei das Druckvolumen vergrößert. Durch Einführung des Drucktemperaturvolumens wird dieser Effekt weitgehend berücksichtigt. Das Drucktemperaturvolumen ist dabei das Volumen eines gasgefüllten Behälters multipliziert mit seinem Gasdruck und dividiert durch die Temperatur in Kelvin.

Bevorzugt hat der Druckgasspeicher ein Drucktemperaturvolumen, das weitgehend dem Drucktemperaturvolumen des zu entleerenden Rohrleitungssystems entspricht. Dies bedeutet, dass das Drucktemperaturvolumen des Druckgasspeichers von dem Volumen des Rohrleitungssystems um maximal 10% abweicht. Der Strömungswiderstand bei einer druckgetriebenen pfropfenförmigen Entleerung eines gleichförmigen Rohrleitungssystems ist proportional zur benetzten Fläche der Rohrleitung. Mit zunehmender Entleerung nimmt die benetzte Fläche der Rohrleitung ab und der Strömungswiderstand sinkt. Bei gleichbleibendem Treibdruck würde eine zunehmend beschleunigte Strömung der Flüssigkeit mit entsprechenden mechanischen Lasten auf das Rohrleitungssystem resultieren. Wird dagegen der Treibdruck eines Druckgasspeichers genutzt, strömt mit fortschreitender Entleerung Gas aus dem Druckgasspeicher aus. Damit verbunden ist ein sinkender Treibdruck im Druckgasspeicher, der ausgehend vom bevorzugten Druckvolumen im Druckgasspeicher am Ende der Entleerung den Druckwert im Entleerungsbehälter erreicht. Die Stromstärke der Entleerung wird durch diesen Effekt vorteilhaft vergleichmäßigt.

In Abhängigkeit von dem aufgebrachten Gasdruck und der damit in der Rohrleitung erzeugten Stärke einer Zweiphasenströmung ergeben sich in einer weitgehend waagerechten langen Rohrleitung unterschiedliche Strömungsbilder. Bei sehr hohen Gasströmen, verursacht durch einen hohen Treibdruck, ist die Zweiphasenströmung aus einer Gasphase und einer flüssigen Phase im Wesentlichen eine Pfropfenströmung, bei der ein Gaspolster die Flüssigkeit vor sich herdrückt. Bei einem niedrigeren Treibdruck wechselt das Strömungsbild zu einer Schichtenströmung, bei der die Gasströmung die Flüssigkeitsströmung überschichtet. Bei diesem Strömungsbild ist die treibende Kraft des Druckgases auf die Flüssigkeit gegenüber einer Pfropfenströmung stark verringert. Die verbleibende treibende Kraft wirkt nur noch über die Reibung der schnell strömenden Gasphase auf die Oberfläche der Flüssigphase.

In einem Solarfeld ist es jedoch sehr aufwändig, eine so große Menge an Druckgas bereit zu stellen, dass bei einer Entleerung einer langen Rohrleitung bis zur vollständigen Entleerung eine Pfropfenströmung aufrecht erhalten werden kann. Dieses Problem wird in einer Ausführungsform dadurch gelöst, dass eine Schwallströmung erzeugt wird. Eine Schwallströmung kann beispielsweise erzeugt werden, indem das Druckgas gepulst auf die Flüssigkeit in einem langen waagerechten Rohr einwirkt. Durch das Aufbringen von Druckgaspulsen wird zeitlich und örtlich begrenzt eine so hohe Druckgasstromdichte erreicht, dass die Bedingungen für eine Pfropfenströmung zeitlich und örtlich begrenzt erreicht werden. Damit wird die treibende Wirkung des Druckgases auf die Flüssigkeit entscheidend verbessert.

Druckgaspulse lassen sich beispielsweise erzeugen, indem an der Einspeisestelle für Druckgas ein Druckgasspeicher vorgesehen ist. Durch wechselseitiges Öffnen zweier Ventile am Druckgasspeicher kann der Druckgasspeicher zyklisch aufgeladen und in Richtung der Flüssigkeit führenden Rohrleitung entleert werden. Eine alternative Möglichkeit besteht darin, einen Phasenscheider zwischen dem Druckgasspeicher und der zu entleerenden Rohrleitung vorzusehen und das Gasvolumen des Phasenscheiders schnell aus einem Druckgasspeicher periodisch zu füllen und den Druckabbau im Phasenscheider durch Abströmung in Richtung der langen Rohrleitung abzuwarten, bis eine Druckschwelle einen erneuten Druckstoß durch Laden des Phasenscheiders auslöst.

Besonders bevorzugt wird zur vollständigen Entleerung des Rohrleitungssystems zunächst ein innerhalb der Anlagenauslegung maximaler Treibdruck aufgebracht und damit die Flüssigkeit in Richtung des Entleerungsbehälters gefördert. Sobald der Treibdruck zum Entleerungsbehälter durchschlägt oder der dezentrale Druckgasspeicher geleert ist, wird die Druckentleerung gestoppt und das Rohrleitungssystem ohne Treibdruck weiter entleert. Wenn der Druckgasspeicher mit Hilfe eines Druckgaserzeugers erneut aufgeladen ist, kann eine weitere Druckentleerung gestartet werden.

Alternativ ist es auch möglich, das Rohrleitungssystem zu entleeren, indem Druckpulse eingebracht werden, die jedoch nur zu einer teilweisen Entleerung führen. Die Druckpulse müssen dabei jeweils so stark sein und mindestens so lange andauern, dass ein Flüssigkeitsschwall in der Rohrleitung erzeugt wird.

Weiterhin können auch beide Entleerungsarten kombiniert werden. Herbei wird vorzugsweise zunächst eine Entleerung mit maximalem Treibdruck durchgeführt, bis der Treibdruck zum Entleerungsbehälter durchschlägt oder der Druckgasspeicher geleert ist und anschließend erfolgt eine Entleerung durch Einbringen von Druckpulsen.

Das Einbringen von Druckpulsen ist insbesondere geeignet, eine Drainage auch im Fall leichter lokaler Abweichungen der Rohrleitung von einem waagrechten oder leicht fallenden Verlauf zu ermöglichen.

Im Fall einer Drainage werden die Rohrleitungsschleifen parallel entleert werden. Dabei werden die Rohrleitungsschleifen mit den geringsten Strömungswiderständen als erstes entleert. Nach dem Durchschlag von Druckgas in einer Rohrleitungsschleife wird bevorzugt Druckgas durch diese Leitung abgeleitet und steht nicht mehr als Treibgas in anderen Schleifen zur Verfügung.
Dem entsprechend sind die Strömungswiderstände in den Rohrleitungen, z.B. durch Regelventile oder geeignete azentrische Blenden, so einzurichten, dass eine ausreichend gleichmäßige Drainage erfolgt. Es ist auch möglich, nach einem Durchschlag Ventile in der entleerten Leitung schließen, um einen Gasdurchbruch durch die bereits entleerte Rohrleitung zu verhindern.

Um zu vermeiden, dass sich in kälteren Bereichen des Rohrleitungssystems Pfropfen durch erstarrende Salzschmelze bilden, die sich beim Entleeren lösen können und mitgerissen werden und dadurch Schäden im Rohrleitungssystem verursachen können, werden in einer Ausführungsform der Erfindung alle Komponenten des Rohrleitungssystems, die von der Flüssigkeit durchströmt werden, auf einer entleerungsfähig hohen Temperatur gehalten. Dies hat jedoch den Nachteil, dass eine große Menge an Energie, beispielsweise elektrischer Energie, benötigt wird, um die Temperatur zu halten. Die Leitungen eines Solarfeldes und auch die Leitungen zu Verteilern und Sammlern sind im Betrieb heiß und bei ausreichender thermischer Isolierung auch sicher entleerungsfähig. Kältere Bereiche des Rohrleitungssystems sind aber zum Beispiel Entleerungsleitungen, die im Betrieb leer sind und das Rohrleitungssystem mit dem Entleerungsbehälter verbinden. Bei Förderung der Salzschmelze in die kalte Entleerungsleitung erstarrt das Salz und es bilden sich die vorstehend genannten Pfropfen, die den Durchfluss unzulässig behindern. Dieses Risiko steigt mit der Länge der Rohrleitung und sinkt mit der Größe ihres Querschnitts.

Neben einer ständigen Beheizung ist es auch möglich und bevorzugt, die Komponenten zur Entleerung erst dann zu beheizen, wenn die Entleerung eingeleitet werden soll. Dies vermeidet den permanenten Energieaufwand zur Beheizung der Entleerungskomponenten. Eine Entleerung des Rohrleitungssystems ist in diesem Fall allerdings erst verzögert, nämlich nach dem Aufheizen, möglich. Bei Energieausfall steigt in diesem Fall das Risiko, dass im zu entleerenden Rohrleitungssystem Schmelze erstarrt.

Besonders problematisch ist die Aufheizung der Entleerungsventile, da diese üblicherweise mit einer höheren Wandstärke ausgestattet sind als die angeschlossenen Rohrleitungen. Das hat einerseits zur Folge, dass Ventile eine hohe Wärmekapazität besitzen und dementsprechend viel Energie zur Beheizung eingespeist werden muss, um die Entleerungstemperatur zu erreichen. Andererseits ist die Fläche, über die Wärme eingebracht werden kann, spezifisch sehr klein. Auch ist zu beachten, dass zu große Temperaturunterschiede im Ventilkörper mechanische Schäden verursachen können. Dies hat zur Folge, dass die Aufheizungszeiten der Ventile besonders hoch sind. Die Aufheizungszeiten lassen sich dadurch vermeiden, dass die Ventile ständig beheizt werden.

Weiterhin ist es möglich, zur Beheizung in die Entleerungsleitung einen Innenheizleiter einzubringen. Durch die Beheizung mit einem Innenheizleiter wird die Zeitspanne für das Aufheizen bis zur Entleerungsfähigkeit deutlich verringert. Diese Zeitersparnis wird insbesondere dadurch erreicht, dass die Wärmekapazität eines Innenheizleiters weit niedriger ist als die einer Rohrleitung und deshalb weniger Wärme aufgebracht werden muss, um die Entleerungstemperatur zu erreichen.

Der Innenheizleiter wird vorzugsweise bis in den Entleerungsbehälter geführt. Weiterhin ist der Innenheizleiter vorzugsweise so gestaltet, dass dieser innenliegende Kanäle aufweist, in der sich geschmolzenes Salz sammelt und abgeführt werden kann. Die Kanäle können zum Beispiel dadurch gebildet werden, dass mindestens drei elektrische Heizleiter umeinander verdrillt (verseilt) sind. In der Mitte der Verseilung bilden sich Zwickel, die sich als Kanäle im Sinne der Erfindung eignen.

Ein für die Entleerung des Rohrleitungssystems geeigneter Entleerungsbehälter zur Aufnahme der durch das Rohrleitungssystem strömenden Flüssigkeit ist mit dem Rohrleitungssystem über ein in den Entleerungsbehälter ragendes Tauchrohr verbunden, wobei zwischen dem Rohrleitungssystem und dem Entleerungsbehälter ein Siphon im Tauchrohr ausgebildet ist und das Tauchrohr beheizbar ist, wobei der Siphon im Betrieb des Rohrleitungssystems durch einen Pfropf aus erstarrtem Material verschlossen ist.

Als Siphon im Rahmen der vorliegenden Erfindung wird nicht nur ein s-förmiger oder u-förmiger Siphon verstanden sondern auch ein ungebogener Bereich einer Rohrleitung, in dem Material erstarren kann, so dass die Rohrleitung durch das erstarrte Material verschlossen wird.

Der mit dem erstarrten Material verschlossene Siphon übernimmt dabei die Funktion des Entleerungsventils. Der Siphon ist beheizbar, vorzugsweise durch einen Innenheizleiter, und sobald eine Entleerung ansteht, wird der Siphon beheizt, so dass das im Siphon enthaltene Material schmilzt und so den Weg in den Entleerungsbehälter freigibt. Durch die Verwendung des Innenheizleiters kann das im Siphon enthaltene Material schnell aufgeheizt und soweit geschmolzen werden, dass die Flüssigkeit aus dem Rohrleitungssystem durch den Siphon in den Entleerungsbehälter ablaufen kann.

Salzpfropfen aus Nitratmischungen besitzen hohe Schmelzvolumina und sind ausgesprochen hart. Dies kann beim ungeeigneten Aufschmelzen zu hohem lokalem Druck auf ein umgebendes Rohrleitungssystem und zu dessen Überdehnung führen. Durch Formung der umgebenden Rohrleitung kann die Toleranz der Siphonkonstruktion gegen lokale Dehnung erhöht werden. Beispielweise kann in dem Bereich, in dem das Material erstarrt und den Pfropf bildet der Querschnitt der Rohrleitung sternförmig gestaltet werden. Einfacher kann im Bereich, in dem sich der Pfropf bildet, alternativ auch die Rohrleitung mit einer merkbaren Ovalität, z.B. 25%, versehen werden.

Im Bereich des Siphons ist der Innenheizleiter vorzugsweise so gestaltet, dass dieser eine erhöhte Heizleistung abgeben kann, um die Heizleistung an die benötigte Schmelzenthalpie anzupassen. Dieses kann beispielsweise dadurch erreicht werden, dass der Innenheizleiter an der Position des Siphons mit einem eigenen zuschaltbaren Heizelement ausgestattet ist. Alternativ kann der Heizleiter im Bereich des Siphons zum Beispiel in Form einer Wendel konzentriert werden. Der Innenheizleiter hat darüber hinaus die Funktion, das im Siphon enthaltene erstarrte Material mechanisch zu stabilisieren. Diese Funktion kann zum Beispiel gut durch eine Formung des Innenheizleiters in einer gegebenenfalls auch mehrlagigen Wendel erzeugt werden. Die so erreichte mechanische Stabilisierung des im Siphon enthaltenen erstarrten Materials führt dazu, dass sich keine großen Schmelzebrocken lösen können und im Strömungsfall zu mechanischen Schäden Anlass geben können.

Im Siphon kann dadurch Material erstarren, indem eine mit Schmelze gefüllte Entleerungsleitung ohne Strömung im Bereich des Siphons unbeheizt verbleibt. Dabei kann ein gegebenenfalls vorhandener Anlagendruck durch Aufbringung eines stabilisierenden Gegendrucks im Entleerungsbehälter bis zur Erstarrung kompensiert werden. Die Schmelze kühlt sich ab und bei Unterschreitung der Erstarrungstemperatur wird der Siphon durch erstarrtes Material verschlossen. Alternativ oder zusätzlich ist es auch möglich, um die Erstarrung zu fördern, den Siphon mit einer im Vergleich zur Restisolation zeitweise verminderten Isolation auszustatten. Alternativ ist auch eine gezielte Kühlung im Bereich des Siphons möglich.

Der Siphon wird so positioniert, dass dieser nahe genug am heißen Rohrleitungssystem liegt, um durch Wärmeübertragung erwärmt zu werden, und andererseits weit genug entfernt liegt, um durch Wärmeübertragung an die kalte Umgebung eine Temperatur zu erreichen, die tief genug ist, um das erstarrte Material mechanisch stabil und dichtend zu erhalten. Eine ständige Vorwärmung des erstarrten Materials führt zu gewünscht niedrigen Aufschmelzzeiten.

Durch das Tauchrohr wird eine erhöhte hydrostatische Höhe erreicht, die zu einer Verringerung der Entleerungszeiten des Rohrleitungssystems führt. Ein weiterer Vorteil des Tauchrohres ist, dass dieses auch zur Wiederbefüllung des Rohrleitungssystems genutzt werden kann, indem die Flüssigkeit aus dem Entleerungsbehälter in das Tauchrohr gedrückt wird. Alternativ oder zusätzlich kann eine Tauchpumpe im Entleerungsbehälter installiert sein, mit der die Flüssigkeit aus dem Entleerungsbehälter in das Rohrleitungssystem oder den Hauptsammler oder Hauptverteiler geführt wird.

Um zu vermeiden, dass insbesondere zu Beginn des Entleerungsvorganges Salzschmelze im anfänglich kalten Tauchrohr erstarrt, ist vorzugsweise zur Beheizung ein Heizleiter im Tauchrohr aufgenommen. Der Heizleiter weist vorzugsweise wie vorstehend beschrieben Kanäle auf, durch die beim Beheizen schmelzende Flüssigkeit ablaufen kann.

Neben einer Entleerung ist auch eine Befüllung des Rohrleitungssystems unverzichtbar für einen effizienten Betrieb. Die Befüllung kann dabei so durchgeführt werden, dass Druckgas in den Entleerungsbehälter eingeführt wird, das die Flüssigkeit durch das Tauchrohr wieder zurück in das Rohrleitungssystem drückt. Alternativ ist es auch möglich, die Flüssigkeit mit Hilfe einer Pumpe zurück in das Rohrleitungssystem zu fördern. Die in das Rohrleitungssystem von unten eindringende Flüssigkeit verdrängt die im Rohrleitungssystem enthaltenen Gase. Die verdrängten Gase können das Rohrleitungssystem über das geöffnete Entlüftungsventil verlassen.

In einer Ausführungsform ist an der höchsten Stelle des Rohrleitungssystems ein T-Stück angeordnet, dessen Abzweig in einen über dem Rohrleitungssystem platzierten Zweiphasenbehälter mündet. Dieser Zweiphasenbehälter kann eine Füllstandsmessung zur Phasenerkennung, zum Beispiel in Form eines Vibrationsgrenzschalters, enthalten. Mit der Füllstandsmessung kann in dem Befüllprozess die Vollständigkeit der Befüllung des Rohrleitungssystems erkannt werden. Sobald Flüssigkeit in den Zweiphasenbehälter eintritt und der Flüssigkeitsspiegel steigt, ist die Befüllung abgeschlossen. Bei Auslösen eines zugehörigen Phasengrenzschalters wird das Entlüftungsventil geschlossen und so der Befüllvorgang gestoppt.

Die Füllstandsmessung kann zusammen mit Aktoren für das Belüftungsventil und das Entlüftungsventil in eine Füllstandsregelung eingebunden werden.

Üblicherweise ist der Zweiphasenbehälter in einem Seitenast des Rohrleitungssystems angeordnet, so dass dieser auch während der Beströmung der Rohrleitung nicht durchflossen wird. Bei einem ausreichend großen Abstand ist die Temperatur des Zweiphasenbehälters von der Temperatur des Rohrleitungssystems entkoppelt. Der Zweiphasenbehälter kann dann gezielt auf eine Temperatur nur knapp oberhalb der Erstarrungstemperatur der durch das Rohrleitungssystem geführten Schmelze beheizt werden, unabhängig von der Temperatur im Rohrleitungssystem. Da Messsysteme für die Einsatztemperaturen im Rohrleitungssystem, die bis zu 550°C betragen können, nahezu unverfügbar sind, erlaubt der Zweiphasenbehälter den Einsatz auch von Messsystemen, deren Temperaturverträglichkeit deutlich niedriger als 550°C liegt. Neben der Füllstandsmessung können so auch eine Druckmessung oder eine Temperaturmessung im Zweiphasenbehälter durchgeführt werden.

Zur Verbesserung der Temperaturentkopplung von Rohrleitungssystem und Zweiphasenbehälter ist es möglich, eine Konvektionsbremse zwischenzuschalten. Eine solche Konvektionsbremse kann zum Beispiel in Form eines Siphons gestaltet sein. Alternativ kann die Konvektionsbremse auch dadurch realisiert werden, dass der Abzweig zum Zweiphasenbehälter mit einer nach unten führenden Leitung gestaltet ist.

Der Siphon kann auch, wie vorstehend für den Entleerungsbehälter beschrieben, mit einem Pfropf aus erstarrtem Material verschlossen werden. Dies hat den Vorteil, dass der Zweiphasenbehälter nicht beheizt werden muss. Desweiteren entfällt der Aufwand zum Betrieb der optionalen Füllstandsregelung Druckgas einzuspeisen. Vor einer Entleerung kann der Pfropf zum Beispiel mittels eines Inneheizleiters mit innen liegendem Schmelzekanal zur Freischaltung der Belüftung aufgeschmolzen werden. Zudem kann der Bereich des Siphons mit dem Pfropf aus erstarrtem Material, wie vorstehend für den Siphon am Entleerungsbehälter beschrieben gegen eine Rohrleitungsüberdehnung geschützt werden.

Ausführungsbeispiele der Erfindung sind in den Figuren dargestellt und werden in der nachfolgenden Beschreibung näher erläutert.

Es zeigen:
- Figur 1: einen Ausschnitt aus einem Solarfeld eines Solarkraftwerks,
- Figur 2: einen Teil eines Rohrleitungssystems mit einer Rohrschleife in einem Solarkraftwerk,
- Figur 3: einen Entleerungsbehälter mit Tauchrohr und Siphon.
- Figur 4: einen Teil eines Rohrleitungssystems mit einem Zweiphasenbehälter,
- Figur 5: ein Rohrstück mit einer Pfropfenströmung,
- Figur 6: ein Rohrstück mit einer Schichtenströmung,
- Figur 7: ein Rohrstück mit einer Schwallströmung,
- Figur 8: ein Teil eines Rohrleitungssystems mit einer Einrichtung zur Erzeugung von Druckpulsen,
- Figur 9: ein Teil eines Rohrleitungssystems mit einer Einrichtung zur Erzeugung von Druckpulsen in einer alternativen Ausführungsform

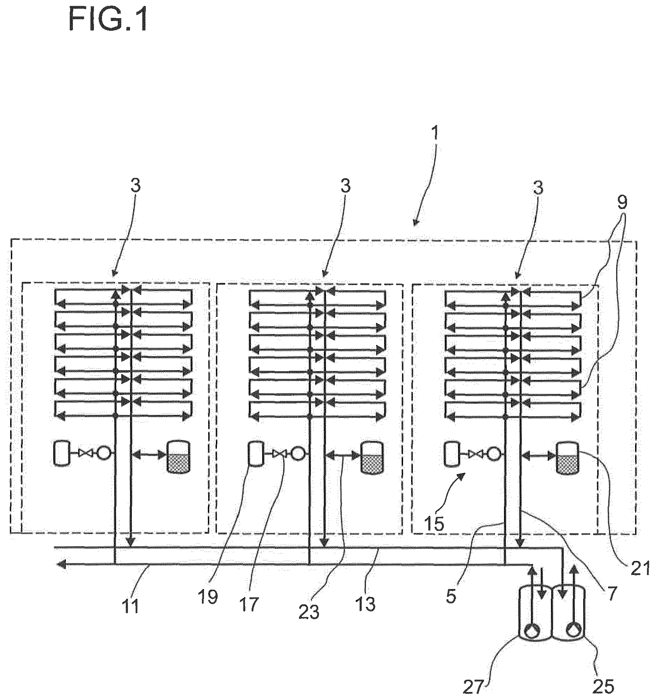

In Figur 1 ist ein Ausschnitt aus einem Solarfeld eines Solarkraftwerks dargestellt.

Ein Solarfeld 1 eines Solarkraftwerks umfasst üblicherweise mehrere Rohrleitungssysteme 3, die jeweils einen Verteiler 5, einen Sammler 7 und mindestens zwei Rohrleitungsschleifen 9 umfassen. Die Verteiler 5 mehrerer Rohrleitungssysteme 3, bevorzugt aller Rohrleitungssysteme 3 sind mit einem Hauptverteiler 11 verbunden. Weiterhin sind die Sammler 7 mehrerer Rohrleitungssysteme 3, vorzugsweise aller Rohrleitungssysteme 3, mit einem Hauptsammler 13 verbunden.

Um im Bedarfsfall eine schnelle Entleerung der einzelnen Rohrleitungssysteme 3 zu ermöglichen, ist in der hier dargestellten Ausführungsform jeder Sammler 7 mit einer Einspeisung 15 für Druckgas verbunden. Die Einspeisung 15 für Druckgas umfasst ein Belüftungsventil 17 und einen Druckgasspeicher 19. Im normalen Betrieb des Solarkraftwerks 1 ist das Belüftungsventil 17 geschlossen. Sobald eine Entleerung erforderlich wird, wird das Belüftungsventil 17 geöffnet.

Ein hier nicht dargestelltes Entlüftungsventil und das Belüftungsventil 17 können über einen Zweiphasenbehälter an den Sammler 7 angeschlossen sein.

Um bei einer Entleerung die im Rohrleitungssystem 3 fließende Salzschmelze aufzunehmen ist der Sammler 7 mit einem Entleerungsbehälter 21 verbunden. Um den Entleerungsbehälter 21 während des normalen Betriebs des Solarkraftwerks 1 zu verschließen, ist es möglich, in einer Entleerungsleitung 23, mit der der Entleerungsbehälter 21 mit dem Sammler 7 verbunden ist, ein hier nicht dargestelltes Entleerungsventil vorzusehen. Das Entleerungsventil ist im normalen Betrieb des Solarkraftwerks 1 geschlossen und wird geöffnet, sobald eine Entleerung erforderlich ist.

Damit bei einer notwendigen Entleerung der Inhalt des gesamten Rohrleitungssystems 3 in den Entleerungsbehälter 21 ablaufen kann, ist es bevorzugt, wenn die Einspeisung 15 für Druckgas zwischen dem Hauptverteiler 11 und der ersten Rohrleitungsschleife 9 des Rohrleitungssystems 3 angeordnet ist. Entsprechend ist der Entleerungsbehälter 21 zwischen dem Hauptsammler 13 und der Einmündung der letzten Rohrleitungsschleife in den Sammler 7 positioniert. Bei Beaufschlagung mit Druckgas nach Öffnen des Belüftungsventils 17 wird so die Flüssigkeit aus dem Verteiler 5 in die Rohrleitungsschleifen 9 gedrückt und aus diesen in den Sammler 7. Aus dem Sammler 7 gelangt die Flüssigkeit dann durch das geöffnete Entleerungsventil in den Entleerungsbehälter 21. Die Entleerung erfolgt nach Schließen von hier nicht dargestellten Abgangsventilen und Zugangsventilen. Diese sind zwischen Verteiler 5 und Hauptverteiler 11 beziehungsweise zwischen Sammler 7 und Hauptsammler 13 positioniert.

Um bei erneuter Inbetriebnahme die Flüssigkeit wieder in das Rohrleitungssystem 21 einzubringen, wird der Prozess umgekehrt und die Flüssigkeit bei geschlossenem Abgangsventil und Zugangsventil aus dem Entleerungsbehälter 21 über den Sammler 7 in die Rohrleitungsschleifen 9 und von dort in den Verteiler 5 gepresst.

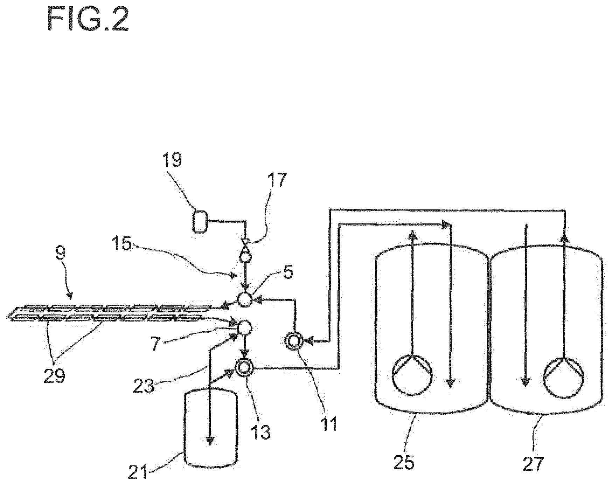

Im laufenden Betrieb des Solarkraftwerks wird Wärmeträgerflüssigkeit, üblicherweise eine Salzschmelze, aus einem kalten Speicherbehälter 27 in den Hauptverteiler 11 gefördert. Hierzu ist es zum Beispiel möglich, im kalten Speicherbehälter 27 ein Tauchrohr vorzusehen, durch das die Wärmeträgerflüssigkeit entnommen wird. Vom Hauptverteiler 11 zweigen die Verteiler 5 ab, so dass die Wärmeträgerflüssigkeit aus dem Hauptverteiler 11 in die Verteiler 5 der einzelnen Rohrleitungssysteme 3 strömt. Aus den Verteilern 5 fließt die Wärmeträgerflüssigkeit in die Rohrleitungsschleifen 9, in denen die Wärmeträgerflüssigkeit durch Sonneneinstrahlung in Kollektoren 29, die in Figur 2 schematisch dargestellt sind, erwärmt wird. Die erwärmte Wärmeträgerflüssigkeit strömt in den Sammler 7, in den die Rohrleitungsschleifen 9 münden. Die Sammler 9 der Rohrleitungssysteme 3 münden im Hauptsammler 13, durch den die erwärmte Wärmeträgerflüssigkeit in den Speicherbehälter 25 gefördert wird.

Zur Erzeugung von elektrischem Strom wird die erwärmte Wärmeträgerflüssigkeit aus dem Speicher 25 genutzt, um Wasserdampf zu erzeugen. Der Wasserdampf seinerseits treibt einen Generator zur Erzeugung elektrischer Energie an. Durch die Erzeugung von Wasserdampf gibt die Wärmeträgerflüssigkeit Wärme ab und wird kälter. Die abgekühlte Wärmeträgerflüssigkeit wird dann in den kalten Speicherbehälter 27 geleitet.

Durch den Einsatz der Wärmeträgerflüssigkeit und der Speicherbehälter 25, 27 ist es möglich, eine so große Menge an Wärmeträgerflüssigkeit zu erwärmen, dass diese auch dann noch zur Wasserdampferzeugung genutzt werden kann, wenn keine Sonneneinstrahlung erfolgt.

Alternativ zu der hier dargestellten Variante mit einem kalten Speicherbehälter 27 und einem Speicherbehälter 25 für die aufgeheizte Wärmeträgerflüssigkeit ist es auch möglich, beispielsweise einen Schichtenspeicher einzusetzen, in dem oben die aufgeheizte Wärmeträgerflüssigkeit und unten die kalte Wärmeträgerflüssigkeit enthalten ist. Entsprechend wird je nach Bedarf oben die heiße und unten die kalte Wärmeträgerflüssigkeit entnommen beziehungsweise zugeführt.

Ein Teil eines Rohrleitungssystems mit einer Rohrschleife ist beispielhaft in Figur 2 dargestellt.

Figur 2 lässt sich insbesondere die Anordnung von Verteiler 5, Sammler 7, Hauptverteiler 11 und Hauptsammler 13 entnehmen. Erfindungsgemäß ist der Verteiler 5 oberhalb des Sammlers 7 angeordnet. Hierdurch ergibt sich ein leichtes Gefälle in den Rohrleitungsschleifen 9, das den Transport der Wärmeträgerflüssigkeit durch die Rohrleitungsschleife 9 in Richtung des Sammlers 7 erleichtert. Aus dem Sammler 7 zweigt eine Entleerungsleitung 23 ab, die in dem Entleerungsbehälter 21 mündet. Durch die Entleerungsleitung kann das Rohrleitungssystem 3 in den Entleerungsbehälter 21 entleert werden.

Um auch bei Energieausfall eine sichere Entleerung des Rohrleitungssystems 3 zu gewährleisten, ist der Entleerungsbehälter tiefer angeordnet als sämtliche Rohrleitungen, das heißt auch tiefer als Verteiler 5, Sammler 7, Hauptverteiler 11 und Hauptsammler 13. Tiefer angeordnet bedeutet in diesem Fall, dass auch bei vollständig gefülltem Entleerungsbehälter 21 der Flüssigkeitsspiegel im Entleerungsbehälter 21 niedriger liegt als die unterste Rohrleitung, in der hier dargestellten Ausführungsform der Hauptsammler 13.

Die Einspeisung 15 für Druckluft befindet sich am höchsten Punkt des Rohrleitungssystems 3, in der hier dargestellten Ausführungsform oberhalb des Verteilers 5 und mündet in den Verteiler 5. Auf diese Weise wird bei einer Entleerung durch einströmendes Druckgas der Transport der Wärmeträgerflüssigkeit durch das Rohrleitungssystem 3 entsprechend der auf die Wärmeträgerflüssigkeit wirkenden Schwerkraft unterstützt.

Um im Fall einer Entleerung auch den Hauptsammler 13 und Hauptverteiler 11 zu entleeren, ist es bevorzugt, wenn aus dem Hauptsammler 13 und/oder dem Hauptverteiler 11 eine Leitung in den Entleerungsbehälter 21 mündet. So kann auch die im Hauptsammler 13 und/oder Hauptverteiler 11 enthaltene Wärmeträgerflüssigkeit in den Entleerungsbehälter 21 abfließen.

Alternativ zu der in Figur 2 dargestellten Ausführungsform, bei der der Verteiler 5 höher liegt als der Sammler 7 ist es auch möglich, den Sammler 7 höher zu positionieren als den Verteiler 5 und/oder den Hauptsammler 13 höher als den Hauptverteiler 11.

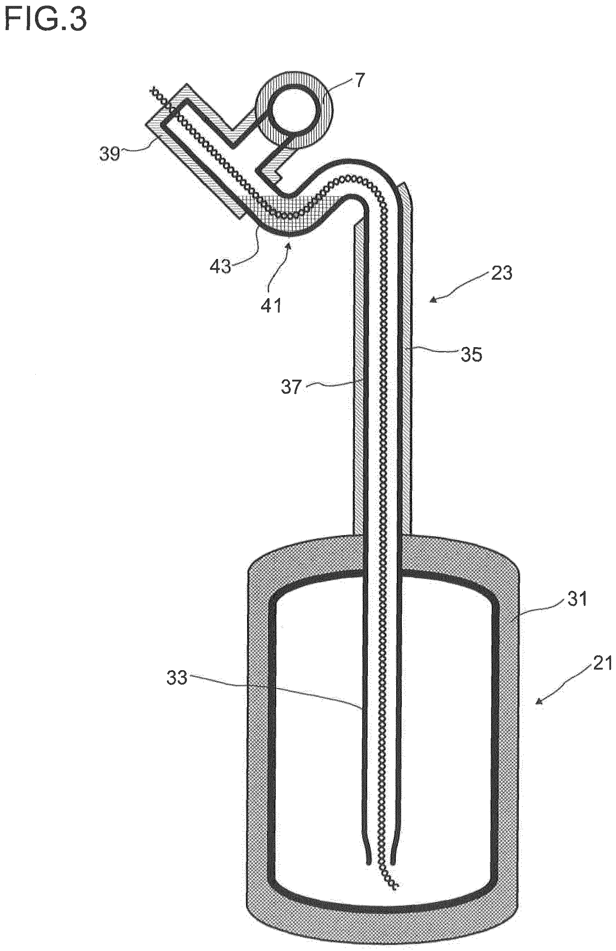

Eine vorteilhafte Ausgestaltung eines Entleerungsbehälters 21 ist in Figur 3 dargestellt.

Damit die Salzschmelze nach dem Entleeren des Rohrleitungssystems 3 nicht sofort erstarrt, ist es bevorzugt, den Entleerungsbehälter 21 mit einer thermischen Isolierung 31 zu versehen. Die Entleerungsleitung 23, durch die das Rohrleitungssystem 3 in den Entleerungsbehälter 21 entleert werden kann, mündet in den Entleerungsbehälter 21 in Form einer Tauchleitung 33. Dies ermöglicht es, das Rohrleitungssystem 3 aus dem Entleerungsbehälter 21 durch die als Tauchrohr 33 wiederzubefüllen, wenn der Betrieb des Solarkraftwerks erneut aufgenommen wird. Damit die Wärmeträgerflüssigkeit beim Entleeren nicht in der Entleerungsleitung 23 erstarrt, ist diese ebenfalls mit einer thermischen Isolierung 35 versehen. Zusätzlich ist es bevorzugt, wenn die Entleerungsleitung 23 beheizbar ist. Hierzu ist in der hier dargestellten Ausführungsform ein Innenheizleiter 37 vorgesehen, der im Inneren der Entleerungsleitung 23 verläuft. Der Innenheizleiter 37 wird dabei durch einen Blindflansch 39 in die Entleerungsleitung eingeführt. Um ein Erstarren der Salzschmelze in der als Tauchrohr 33 ausgebildeten Entleerungsleitung 23 zu verhindern, ist es besonders bevorzugt, den Innenheizleiter 37 durch die gesamte Entleerungsleitung 23 zu führen, so dass die Entleerungsleitung 23 entlang ihrer gesamten Länge beheizt werden kann.

Alternativ zu einem Innenheizleiter kann selbstverständlich auch jede andere Rohrheizung für die Entleerungsleitung 23 genutzt werden. Zum Beispiel kann ein innen oder außen an der Rohrwandung der Entleerungsleitung 23 anliegender isolierter Heizleiter genutzt werden oder die Rohrleitung selber enthält ein elektrisch leitendes Material, so dass die Rohrwandung direkt beheizt werden kann. Bevorzugt ist allerdings ein Innenheizleiter 37.

Um den Entleerungsbehälter 21 im laufenden Betrieb des Solarkraftwerks zu verschließen, ist es möglich, ein Entleerungsventil in der Entleerungsleitung 23 vorzusehen. Bevorzugt ist es jedoch, wie in Figur 3 dargestellt, die Entleerungsleitung 23 mit einem Siphon 41 zu versehen, wobei der Siphon vorzugsweise weniger gut thermisch isoliert oder nicht thermisch isoliert ist. Durch die fehlende oder geringere thermische Isolierung ist die Rohrleitung im Bereich des Siphons kalt, so dass die Salzschmelze im Siphon erstarrt. Hierdurch bildet sich ein Pfropf 43 aus erstarrtem Material, der die Entleerungsleitung gegen das Rohrleitungssystem 3 verschließt, so dass im laufenden Betrieb keine Salzschmelze in den Entleerungsbehälter 21 abfließen kann.

Wenn eine Entleerung notwendig ist, wird das erstarrte Material des Pfropfs 43 geschmolzen und auf diese Weise der Zulauf in den Entleerungsbehälter 21 freigegeben. Um das erstarrte Material des Pfropfs 43 zu schmelzen, wird die Entleerungsleitung 23 zumindest im Bereich des Siphons 41 beheizt. Besonders bevorzugt ist es, die Beheizung mit dem Innenheizleiter 37 durchzuführen, wobei der Innenheizleiter 37 auch durch den Pfropf 43 aus erstarrtem Material geführt ist.

Der Innenheizleiter weist vorzugsweise innenliegende Kanäle auf, durch die bereits kurze Zeit nach Beginn der Beheizung das den Innenheizleiter unmittelbar umschließende und damit als erstes geschmolzene Material abfließen kann. Hierdurch wird ein Strömungskanal erzeugt, durch den die Salzschmelze in den Entleerungsbehälter 21 fließen kann. Durch den Kontakt mit der heißen Salzschmelze wird das Aufschmelzen des den Pfropf 43 bildenden erstarrten Materials beschleunigt und damit der Durchflussquerschnitt schnell weiter vergrößert.

Um die Entleerungsleitung 23 im Bereich des Siphons 41 zu verschließen ist neben dem Verzicht auf eine thermische Isolierung, wie es hier dargestellt ist, alternativ oder zusätzlich auch eine gezielte Kühlung möglich. Hierzu können zum Beispiel Kühlschlangen um den Siphon gelegt werden, durch die ein Kältemittel zur Kühlung geleitet wird. Auch eine innenliegende Kühlschlange im Bereich des Siphons ist denkbar. Wenn eine zusätzliche Kühlung vorgesehen ist, die durch ein Kältemittel realisiert wird, so ist es auch möglich, im Falle einer notwendigen Entleerung einen Wärmeträger durch die Kühlschlangen zu leiten und so eine zusätzliche Wärmequelle bereitzustellen. Bevorzugt ist es jedoch, nur zur Erzeugung des Pfropfs 43 aus erstarrtem Material zu kühlen und anschließend auf eine weitere Kühlung zu verzichten.

Um insbesondere im Fall eines Energieausfalls, der ein Entleeren erforderlich macht, ein Aufschmelzen des den Pfropf 43 bildenden erstarrten Materials zu ermöglichen, ist es besonders bevorzugt, wenn der Innenheizleiter 37 von einer unabhängigen Energieversorgung gespeist wird. Diese kann dann auch im Fall eines allgemeinen Energieausfalls genügend elektrische Energie zur Beheizung der Entleerungsleitung 23 bereitstellen. Die unabhängige Energieversorgung lässt sich zum Beispiel durch ein Notstromaggregat oder gegebenenfalls auch durch eine wieder aufladbare Batterie realisieren.

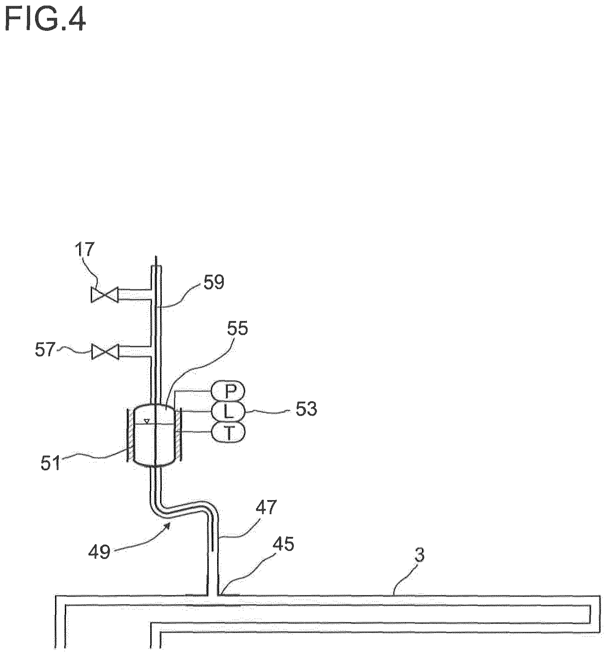

Figur 4 zeigt einen Teil eines Rohrleitungssystems mit einem Zweiphasenbehälter.

An das Rohrleitungssystem 3 ist in der in Figur 4 dargestellten Ausführungsform über ein T-Stück 45 an der höchsten Stelle ein Abzweig 47 angeordnet. Mit dem Abzweig 47 ist über einen Siphon 49 zur Temperaturentkopplung ein Zweiphasenbehälter 51 verbunden. An den Zweiphasenbehälter können temperaturempfindliche Messsysteme, zum Beispiel zur Messung von Füllstand, Temperatur und Druck, angeschlossen werden.

Mit einem Füllstandsmesssystem 53 kann zum Beispiel beim Befüllprozess des Rohrleitungssystems 3 ein zeitlicher Endpunkt detektiert werden. So ist das Rohrleitungssystem vollständig befüllt, wenn der Flüssigkeitsstand im Zweiphasenbehälter 51 zunimmt.

Am Gasraum 55 des Zweiphasenbehälters 51 ist mindestens ein Belüftungsventil 17 angeordnet. Zusätzlich kann auch ein separates Entlüftungsventil 57 vorgesehen sein. In der hier dargestellten Anordnung haben das Belüftungsventil 17 und das Entlüftungsventil 57 keinen Kontakt mit dem eingesetzten Wärmeträger, beispielsweise der Salzschmelze, und sind aufgrund der Temperaturentkopplung, die es ermöglicht, den Zweiphasenbehälter 51 auf einer Temperatur nur knapp oberhalb der Erstarrungstemperatur des Wärmeträgers zu halten, auch nur dieser Temperatur ausgesetzt, wodurch die Lebensdauer der Ventile 17, 57 signifikant erhöht werden kann.

Besonders effizient kann die Beheizung des Zweiphasenbehälters 51 durch einen Innenheizleiter 59 realisiert werden. Hierbei verfügt der Innenheizleiter 59 vorzugsweise über innere Schmelzekanäle, beispielsweise in Form einer in axialer Richtung verlaufenden Nut, oder indem der Innenheizleiter als Hohlkörper mit radialen Öffnungen ausgebildet ist. Auch ist es möglich, die Schmelzekanäle zu realisieren, indem ein Innenheizleiter in Form eines Gestricks oder eines verdrillten Seiles eingesetzt wird.

Der Innenheizleiter 59 erstreckt sich vorzugsweise bis in den Siphon 49. Dies erlaubt es, dass Wärmeträger im Siphon erstarrt, einen Pfropf bildet und den Siphon auf diese Weise verschließt. Bei Bedarf, zum Beispiel, wenn das Rohrleitungssystem 3 entleert werden soll, kann der Pfropf aus erstarrtem Wärmeträger mittels des Innenheizleiters 59 aufgeschmolzen werden, so dass der Siphon 51 zur Durchströmung mit Gas über das Belüftungsventil 17 durch den Zweiphasenbehälter 51 und den Siphon 49 in das Rohrleitungssystem 3 freigegeben wird.

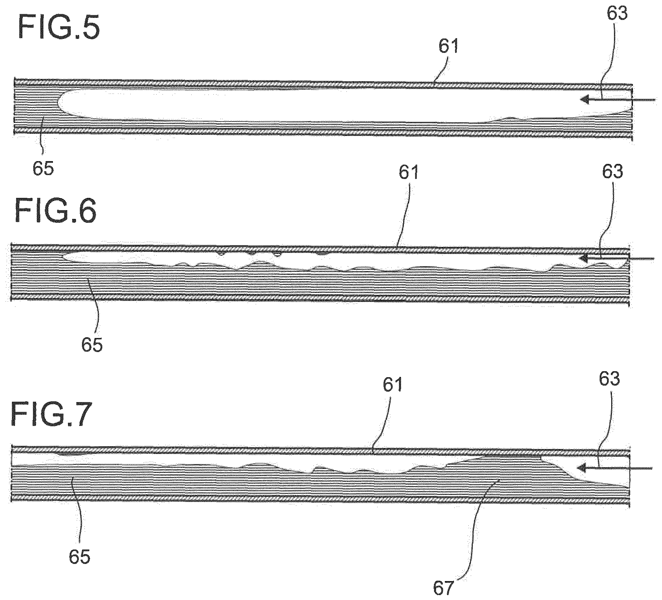

Eine Pfropfenströmung, wie sie sich einstellen kann, wenn das Rohrleitungssystem 3 mit Gas mit einem hohen Treibdruck durchströmt wird, ist in Figur 5 dargestellt.

Bei dem hier dargestellten Ausschnitt aus einem Rohrleitungssystem 3 tritt von rechts Treibgas 63 ein. Das Treibgas 63 verdrängt einen großen Teil der in dem Rohrleitungssystem 3 enthaltenen Flüssigkeit 65 in Form eines Pfropfes, der vor dem Treibgas 63 hergeschoben wird.

Eine Schichtenströmung, die sich bei geringem Druck des Treibgases einstellt, ist in Figur 6 dargestellt.

Auch hier tritt das Treibgas 63 von links in das dargestellte Teilstück eines Rohrleitungssystems 3 ein. Aufgrund des geringen Drucks ist das Treibgas 63 jedoch nicht in der Lage, die gesamte Flüssigkeit 65 in Form eines Pfropfes vor sich hierzuschieben. Es bildet sich eine Schichtenströmung, bei der im oberen Teil das Treibgas 63 die Flüssigkeit 65 verdrängt und im unteren Teil die Flüssigkeit 65 in der Rohrleitung verbleibt. Ein Flüssigkeitstransport erfolgt nur durch Reibung des Treibgases 63 an der Oberfläche der Flüssigkeit 65.

Eine Schwallströmung, wie sie durch Druckpulse mit dem Treibgas 63 erzielt werden kann, ist in Figur 7 dargestellt. Hier wird durch Druckpulse mit dem Treibgas 63 ein Flüssigkeitsschwall 67 erzeugt, der durch den Druck des Treibgases durch das Rohrleitungssystem gefördert wird.

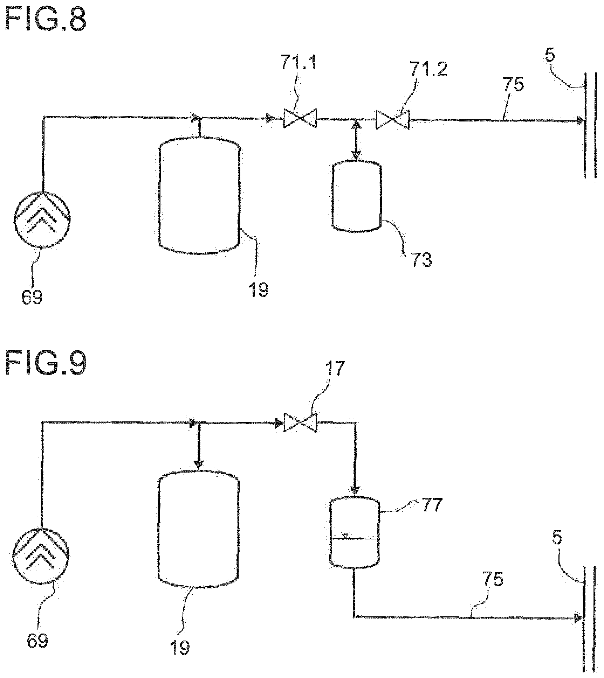

Eine mögliche Vorrichtung, mit der Druckpulse erzeugt werden können, ist beispielhaft in Figur 8 dargestellt.

Bei der in Figur 8 dargestellten Vorrichtung zur Erzeugung von Druckpulsen, wird mittels eines Druckgaserzeugers 69, beispielsweise einem Kompressor, Druckgas kontinuierlich in einen dezentralen Druckgasspeicher 19 eingeführt. Aus dem Druckgasspeicher 19 wird durch zwei wechselseitig schaltende Ventile 71.1, 71.2 Gas bei geöffnetem ersten Ventil 71.1 und geschlossenem zweiten Ventil 71.2 aus dem dezentralen Druckgasspeicher 19 in einen Pufferspeicher 73 geführt. Anschließend schließt das erste Ventil 71.1 und das zweite Ventil 71.2 öffnet. Hierdurch strömt das Gas aus dem Pufferspeicher 73 durch eine Rohrleitung 75 in den Verteiler 5 des hier nicht dargestellten Rohrleitungssystems 3.

Eine alternative Ausführungsform einer Vorrichtung zur Erzeugung von Druckpulsen ist in Figur 9 dargestellt.

Bei der in Figur 9 dargestellten Ausführungsform wird Druckgas mit einem Druckgaserzeuger 69 kontinuierlich in den dezentralen Druckgasspeicher 19 eingeführt. Aus dem Druckgasspeicher 19 werden durch ein Belüftungsventil 17 unter Nutzung eines Phasenscheiders 77, dessen Pufferfunktion genutzt wird, Druckpulse in das zu entleerende Rohrleitungssystem 3 eingeleitet. Hierzu ist die in Figur 9 dargestellte Vorrichtung ebenfalls vorzugsweise am Verteiler 5 des Rohrleitungssystems 3 angeschlossen.

Wenn die Druckpulse unter Nutzung des Phasenscheiders 77 eingespeist werden sollen, ist es vorteilhaft, wenn die Rohrleitung 79 vom Druckluftspeicher 19 zum Phasenscheider 77 einen deutlich niedrigeren Strömungswiderstand aufweist als das Rohrleitungssystem 3 und die Rohrleitung 81 vom Druckgaserzeuger 69 zum dezentralen Druckspeicher 19.

### Bezugszeichenliste

- 1: Solarfeld
- 3: Rohrleitungssystem
- 5: Verteiler
- 7: Sammler
- 9: Rohrleitungsschleife
- 11: Hauptverteiler
- 13: Hauptsammler
- 15: Einspeisung für Druckgas
- 17: Belüftungsventil
- 19: Druckgasspeicher
- 21: Entleerungsbehälter
- 23: Entleerungsleitung
- 25: Speicherbehälter
- 27: kalter Speicherbehälter
- 29: Kollektor
- 31: thermische Isolierung
- 33: Tauchrohr
- 35: thermische Isolierung
- 37: Innenheizleiter
- 39: Blindflansch
- 41: Siphon
- 43: Pfropf aus erstarrtem Material
- 45: T-Stück
- 47: Abzweig
- 49: Siphon
- 51: Zweiphasenbehälter
- 53: Füllstandsmesssystem
- 55: Gasraum
- 57: Entlüftungsventil
- 59: Innenheizleiter
- 61: Rohrstück
- 63: Treibgas
- 65: Flüssigkeit
- 67: Flüssigkeitsschwall
- 69: Druckgaserzeuger
- 71.1: erstes Ventil
- 71.2: zweites Ventil
- 73: Pufferspeicher
- 75: Rohrleitung
- 77: Phasenscheider

## Patentansprüche

1. Solarfeld für ein linear konzentrierendes Solarkraftwerk (1), mit einem Druckgasspeicher (19), einem Entleerungsbehälter (21), einer Salzschmelze und einem Rohrleitungssystem umfassend mindestens eine Rohrleitung (9) mit einem Sammler (7), einem Verteiler (5) und Kollektoren (29), wobei die Rohrleitung (9) an einem Ende mit dem Sammler (7) und an einem zweiten Ende mit dem Verteiler (5) verbunden ist, wobei der Sammler (7) und der Verteiler (5) in unterschiedlicher geodätischer Höhe angeordnet sind und bei oben liegendem Sammler (7) in den Sammler Druckgas eingespeist werden kann und der Verteiler (5) mit dem Entleerungsbehälter (21) verbunden ist und bei oben liegendem Verteiler (5) in den Verteiler (5) Druckgas einspeist werden kann und der Sammler (7) mit dem Entleerungsbehälter (21) verbunden ist, wobei der Entleerungsbehälter (21) tiefer liegt als der Sammler (7) und der Verteiler (5), wobei die Druckgaseinspeisung aus dem Druckgasspeicher (19) erfolgt, der mit dem Sammler (7) beziehungsweise Verteiler (5) verbunden ist, wobei der Entleerungsbehälter (21) mit dem Rohrleitungssystem (3) über ein in den Entleerungsbehälter (21) ragendes Tauchrohr (33) verbunden ist, wobei zwischen dem Rohrleitungssystem (3) und dem Entleerungsbehälter (21) ein Siphon (41) im Tauchrohr (33) ausgebildet ist und das Tauchrohr (33) beheizbar ist, wobei der Siphon (41) im Betrieb des Rohrleitungssystems (3) durch erstarrtes Material (43) verschlossen ist.

2. Solarfeld gemäß Anspruch 1, **dadurch gekennzeichnet, dass** der Sammler (7) und der Verteiler (5) in Form jeweils einer Rohrleitung ausgebildet sind und die mindestens eine Rohrleitung (9), die an einem Ende mit dem Sammler (7) und am anderen Ende mit dem Verteiler (5) verbunden ist, jeweils mit einem Ende aus dem Sammler (7) und mit dem anderen Ende aus dem Verteiler (5) abzweigen.

3. Solarfeld gemäß Anspruch 1 oder 2, **dadurch gekennzeichnet, dass** der Sammler (7) und der Verteiler (5) an einem Ende miteinander verbunden sind, so dass Flüssigkeit, die nicht aus dem Verteiler (5) in eine Rohrleitung (9) strömt, am Ende des Verteilers (5) in den Sammler (7) geleitet wird.

4. Solarfeld gemäß einem der Ansprüche 1 bis 3, **dadurch gekennzeichnet, dass** das Rohrleitungssystem (3) mehrere Sammler (7) und Verteiler (5) umfasst, die jeweils mit mehreren Rohrleitungen (9) verbunden sind, wobei alle Sammler (7) mit einem Hauptsammler (13) und alle Verteiler (5) mit einem Hauptverteiler (11) verbunden sind.

5. Solarfeld gemäß Anspruch 4, **dadurch gekennzeichnet, dass** die Entleerungsbehälter (21) jeweils zwischen dem Hauptsammler (13) bei oben liegendem Verteiler (5) beziehungsweise Hauptverteiler (11) bei obenliegendem Sammler (7) und der ersten abzweigenden Rohrleitung (9) positioniert sind.

6. Solarfeld gemäß Anspruch 4 oder 5, **dadurch gekennzeichnet, dass** die Einspeisung (15) für Druckgas jeweils zwischen dem Hauptsammler (13) bei oben liegendem Sammler (7) beziehungsweise Hauptverteiler (11) bei oben liegendem Verteiler (5) und der ersten abzweigenden Rohrleitung (9) positioniert sind.

7. Solarfeld gemäß einem der Ansprüche 4 bis 6, **dadurch gekennzeichnet, dass** der Entleerungsbehälter (21) tiefer liegt als der Hauptverteiler (11) und der Hauptsammler (13) und der Hauptverteiler (11) und/oder der Hauptsammler (13) mit dem Entleerungsbehälter (21) verbunden sind.

8. Solarfeld gemäß Anspruch 7, **dadurch gekennzeichnet, dass** das Druckgas komprimierte Luft oder komprimierter Stickstoff oder komprimiertes Anlagengas ist oder durch Kompression der gasförmigen Phase des Wärmespeichersystems gewonnen wird.

9. Solarfeld gemäß einem der Ansprüche 1 bis 8, **dadurch gekennzeichnet, dass** zwischen dem Druckgasspeicher (19) und dem Sammler (7) beziehungsweise Verteiler (9) ein Phasenscheider (77) aufgenommen ist.

10. Solarfeld gemäß einem der Ansprüche 1 bis 9, **dadurch gekennzeichnet, dass** zwischen dem Druckgasbehälter (19) und dem Sammler (7) beziehungsweise Verteiler (9) zwei wechselseitig schaltende Ventile (71.1, 71.2) und ein Pufferbehälter (73) zwischen den Ventilen (71.1, 71.2) aufgenommen sind.

11. Solarfeld gemäß einem der Ansprüche 1 bis 10, **dadurch gekennzeichnet, dass** am höchsten Punkt des Rohrleitungssystems (3) ein Zweiphasenbehälter (51) über einen Siphon (49) angeschlossen ist, wobei der Gasraum des Zweiphasenbehälters (51) mit dem Belüftungsventil (17) verbunden ist.

12. Solarfeld gemäß einem der Ansprüche 1 bis 11, **dadurch gekennzeichnet, dass** der Siphon (41) aus einer Rohrleitung gebildet wird, deren Querschnitt so geformt ist, dass die den Siphon bildende Rohrleitung tolerant gegen lokale Dehnungen während des Aufschmelzprozesses des erstarrten Materials ist.

13. Solarfeld gemäß einem der Ansprüche 1 bis 12, **dadurch gekennzeichnet, dass** zur Beheizung ein Innenheizleiter (37) im Tauchrohr (33) aufgenommen ist, wobei der Innenheizleiter (37) vorzugsweise Kanäle aufweist, durch die beim Beheizen schmelzende Flüssigkeit ablaufen kann.

## Claims

1. A solar field for a linearly concentrating solar power plant (1), having a compressed gas store (19), a drainage tank (21), a molten salt and a pipeline system comprising at least one pipeline (9) with a header (7), a manifold (5) and collectors (29), the pipeline (9) being connected at one end to the header (7) and at a second end to the manifold (5), the header (7) and the manifold (5) being arranged at different geodetic heights, and, in the case of a header (7) lying at the top, it being possible for compressed gas to be fed into the header and the manifold (5) being connected to the drainage tank (21) and, in the case of a manifold (5) being arranged at the top, it being possible for compressed gas to be fed into the manifold (5) and the header (7) being connected to the drainage tank (21), the drainage tank (21) lying at a lower point than the header (7) and the manifold (5), the compressed gas being fed in from the compressed gas store (19) which is connected to the header (7) or manifold (5), the drainage tank (21) being connected to the pipeline system (3) via a dip pipe (33) which protrudes into the drainage tank (21), a siphon (41) being configured in the dip pipe (33) between the pipeline system (3) and the drainage tank (21), and it being possible for the dip pipe (33) to be heated, the siphon (41) being closed by way of solidified material (43) during operation of the pipeline system (3).

2. The solar field as claimed in claim 1, wherein the header (7) and the manifold (5) are configured in the form of in each case one pipeline, and the at least one pipeline (9) which is connected at one end to the header (7) and at the other end to the manifold (5) branch off in each case with one end from the header (7) and with the other end from the manifold (5).

3. The solar field as claimed in claim 1 or 2, wherein the header (7) and the manifold (5) are connected to one another at one end, with the result that liquid which does not flow from the manifold (5) into a pipeline (9) is guided into the header (7) at the end of the manifold (5).

4. The solar field as claimed in one of claims 1 to 3, wherein the pipeline system (3) comprises a plurality of headers (7) and manifolds (5) which are connected in each case to a plurality of pipelines (9), all the headers (7) being connected to a main header (13), and all the manifolds (5) being connected to a main manifold (11).

5. The solar field as claimed in claim 4, wherein the drainage tanks (21) are positioned in each case between the main header (13) in the case of a manifold (5) lying at the top, or the main manifold (11) in the case of a header (7) lying at the top, and the first pipeline (9) which branches off.

6. The solar field as claimed in claim 4 or 5, wherein the feed means (15) for compressed gas are positioned in each case between the main header (13) in the case of a header (7) lying at the top, or the main manifold (11) in the case of a manifold (5) lying at the top, and the first pipeline (9) which branches off.

7. The solar field as claimed in one of claims 4 to 6, wherein the drainage tank (21) lies at a lower point than the main manifold (11) and the main header (13), and the main manifold (11) and/or the main header (13) are/is connected to the drainage tank (21).

8. The solar field as claimed in claim 7, wherein the compressed gas is compressed air or compressed nitrogen or compressed plant gas, or is obtained by way of compression of the gaseous phase of the heat accumulator system.

9. The solar field as claimed in one of claims 1 to 8, wherein a phase separator (77) is received between the compressed gas store (19) and the header (7) or manifold (9).

10. The solar field as claimed in one of claims 1 to 9, wherein two alternately switching valves (71.1, 71.2) are received between the compressed gas tank (19) and the header (7) or manifold (9), and a buffer tank (73) is received between the valves (71.1, 71.2).

11. The solar field as claimed in one of claims 1 to 10, wherein a two-phase tank (51) is connected via a siphon (49) at the highest point of the pipeline system (3), the gas space of the two-phase tank (51) being connected to the venting valve (17).

12. The solar field as claimed in one of claims 1 to 11, wherein the siphon (41) is formed from a pipeline, the cross section of which is shaped in such a way that the pipeline which forms the siphon is tolerant to local expansions during the melting process of the solidified material.

13. The solar field as claimed in one of claims 1 to 12, wherein an inner heating conductor (37) is received in the dip pipe (33) for heating purposes, the inner heating conductor (37) preferably having channels, through which liquid which melts during heating can run out.

## Revendications

1. Parc solaire pour une centrale photovoltaïque (1) à concentration linéaire, comprenant un accumulateur de gaz comprimé (19), un réservoir de vidage (21), un sel fondu et un système de conduites comportant au moins une conduite (9) avec un collecteur (7), un distributeur (5) et des capteurs (29), la conduite (9) étant reliée par une extrémité au collecteur (7) et par un deuxième extrémité au distributeur (5), le collecteur (7) et le distributeur (5) étant disposés à des hauteurs géodésiques différentes et, lorsque le collecteur (7) se trouve en haut, du gaz comprimé pouvant être injecté dans le collecteur et le distributeur (5) étant relié au réservoir de vidage (21) et, lorsque le distributeur (5) se trouve en haut, du gaz comprimé pouvant être injecté dans le distributeur (5) et le collecteur (7) étant relié au réservoir de vidage (21),
le réservoir de vidage (21) se trouvant plus bas que le collecteur (7) et que le distributeur (5), l'injection de gaz comprimé s'effectuant à partir de l'accumulateur de gaz comprimé (19) qui est relié au collecteur (7) ou au distributeur (5), le réservoir de vidage (21) étant relié au système de conduites (3) par le biais d'un tube plongeur (33) qui fait saillie dans le réservoir de vidage (21), un siphon (41) étant formé dans le tube plongeur (33) entre le système de conduites (3) et le réservoir de vidage (21) et le tube plongeur (33) pouvant être chauffé, le siphon (41) étant fermé par de la matière solidifiée (43) lors du fonctionnement du système de conduites (3).

2. Parc solaire selon la revendication 1, **caractérisé en ce que** le collecteur (7) et le distributeur (5) sont respectivement réalisés sous la forme d'une conduite et l'au moins une conduite (9), qui est reliée par une extrémité au collecteur (7) et par l'autre extrémité au distributeur (5), est bifurque respectivement du collecteur (7) par une extrémité et du distributeur (5) par l'autre extrémité.

3. Parc solaire selon la revendication 1 ou 2, **caractérisé en ce que** le collecteur (7) et le distributeur (5) sont reliés l'un à l'autre au niveau d'une extrémité, de sorte que le liquide qui ne s'écoule pas hors du distributeur (5) dans une conduite (9) soit acheminé dans le collecteur (7) à la fin du distributeur (5).

4. Parc solaire selon l'une des revendications 1 à 3, **caractérisé en ce que** le système de conduites (3) comporte plusieurs collecteurs (7) et distributeurs (5), lesquels sont respectivement reliés à plusieurs conduites (9), tous les collecteurs (7) étant reliés à un collecteur principal (13) et tous les distributeurs (5) à un distributeur principal (11).

5. Parc solaire selon la revendication 4, **caractérisé en ce que** le réservoir de vidage (21) est respectivement positionné entre le collecteur principal (13), lorsque le distributeur (5) se trouve en haut, ou le distributeur principal (11), lorsque le collecteur (7) se trouve en haut, et la première conduite (9) bifurquante.

6. Parc solaire selon la revendication 4 ou 5, **caractérisé en ce que** le point d'injection (15) du gaz comprimé est respectivement positionné entre le collecteur principal (13), lorsque le collecteur (7) se trouve en haut, ou le distributeur principal (11), lorsque le distributeur (5) se trouve en haut, et la première conduite (9) bifurquante.

7. Parc solaire selon l'une des revendications 4 à 6, **caractérisé en ce que** le réservoir de vidage (21) se trouve plus bas que le distributeur principal (11) et le collecteur principal (13), et le distributeur principal (11) et/ou le collecteur principal (13) sont reliés au réservoir de vidage (21).

8. Parc solaire selon la revendication 7, **caractérisé en ce que** le gaz comprimé est de l'air comprimé ou de l'azote comprimé ou encore du gaz de l'équipement comprimé, ou alors il est obtenu par compression de la phase gazeuse du système d'accumulateur de chaleur.

9. Parc solaire selon l'une des revendications 1 à 8, **caractérisé en ce qu'**un séparateur de phases (77) est accueilli entre l'accumulateur de gaz comprimé (19) et le collecteur (7) ou le distributeur (9).

10. Parc solaire selon l'une des revendications 1 à 9, **caractérisé en ce que** deux vannes (71.1, 71.2) à commutation alternée ainsi qu'un réservoir tampon (73) entre les vannes (71.1, 71.2) sont accueillis entre l'accumulateur de gaz comprimé (19) et le collecteur (7) ou le distributeur (9).

11. Parc solaire selon l'une des revendications 1 à 10, **caractérisé en ce qu'**un réservoir à deux phases (51) est raccordé par le biais d'un siphon (49) au point le plus haut du système de conduites (3), l'espace à gaz du réservoir à deux phases (51) étant relié à la soupape de ventilation (17).

12. Parc solaire selon l'une des revendications 1 à 11, **caractérisé en ce que** le siphon (41) est formé par une conduite dont la section transversale est façonnée de telle sorte que la conduite qui forme le siphon est tolérante aux dilatations locales pendant le processus de fusion de la matière durcie.

13. Parc solaire selon l'une des revendications 1 à 12, **caractérisé en ce qu'**un conducteur chauffant intérieur (37) est accueilli dans le tube plongeur (33) pour le chauffage, le conducteur chauffant intérieur (37) possédant de préférence des canaux à travers lesquels peut s'écouler le liquide de fonte produit lors du chauffage.
